# EUROPEAN PATENT APPLICATION

(11) **EP 4 604 189 A1**
(43) Date of publication of application: **20.08.2025**
(21) Application number: 24823670.5
(22) Date of filing: 11.06.2024
(51) Int. Cl.: H01M 4/04, F26B 21/00, B05B 1/20, B05B 13/04, B05B 12/14, B05B 12/08, F26B 13/10

(54) **FLUID SPRAYING DEVICE FOR DRYING ELECTRODE SHEET AND ELECTRODE SHEET DRYING DEVICE INCLUDING SAME**

(30) Priority: 12.06.2023 KR 20230074587
(71) Applicant: LG Energy Solution, Ltd., Seoul 07335 (KR)
(72) Inventor: PARK, Min Gu, Daejeon 34122 (KR); PARK, Joon Sun, Daejeon 34122 (KR); LEE, Taek Soo, Daejeon 34122 (KR)
(74) Representative: Plasseraud IP
(86) International application number: PCT/KR2024/007981
(87) International publication number: WO 2024/258152

(57) **Abstract**

According to exemplary embodiments, a fluid spraying device for drying electrode sheets is provided. The fluid spraying device for drying electrode sheets includes: a fluid storage tank; a plurality of flow paths in fluid communication with the fluid storage tank; a first side nozzle coupled to one of the plurality of flow paths; a second side nozzle coupled to one of the plurality of flow paths; at least one center nozzle coupled to one of the plurality of flow paths, wherein the first and second side nozzles and the center nozzle are configured to be movable in a first direction perpendicular to the machine direction (MD) of the electrode sheet.

## Description

### [Technical Field]

This application claims the benefit of priority to Korean Patent Application No. 10-2023-0074587, filed on June 12, 2023, the disclosure of which is incorporated herein by reference in its entirety.

The technical ideas of the present invention relate to a fluid spraying device for drying electrode sheet and an electrode sheet drying device including the same.

More specifically, the technical ideas of the present invention relate to an electrode sheet drying device, including an electrode sheet drying fluid spraying device, which can be used for drying different electrode sheets having different patterns on a non-coated part, and which can prevent the occurrence of wrinkles and cracks in the electrode sheet by resolving stress concentration phenomena appearing on the non-coated part.

### [Background Technology of the Invention]

An electrode can be manufactured by a coating step, which coats an electrode slurry onto a current collector, and a drying step, which removes fluid from the electrode slurry.

During the coating step, the electrode slurry is not coated on all sides of the current collector. This is because the tabs, which are the electron transport pathways of the electrode, must be bonded to the current collector. Therefore, the electrode sheet that has undergone the coating step will have a coated part with the electrode slurry coated on the current collector and a non-coated part with no electrode slurry coated on the current collector.

During the drying step, the shrinkage of the coated and non-coated parts is different. The coated part is coated with electrode slurry and shrinks due to heat, but the non-coated part is not coated with electrode slurry and does not shrink due to heat. Therefore, stress concentration phenomenon appears in the non-coated part due to the shrinkage of the coated part. The stress concentration phenomenon in the non-coated part causes wrinkles and cracks in the electrode sheet, which degrades the quality of the electrode sheet.

### [Description of the Invention]

### [Technical Problem]

The technical idea of the present invention is to solve the problem of stress concentration in the non-coated part, preventing the occurrence of wrinkles and cracks in the electrode sheet.

### [Technical Solution]

According to exemplary embodiments of the present invention to address the above challenges, there is provided a fluid spray device for drying electrode sheets. The fluid spraying device for drying electrode sheet includes:
a fluid storage tank;
a plurality of flow paths in fluid communication with the fluid storage tank;
a first side nozzle coupled to one of the plurality of flow paths;
a second side nozzle coupled to one of the plurality of flow paths;
at least one center nozzle coupled to one of the plurality of flow paths, wherein
the first and second side nozzles and the center nozzle are configured to be movable in a first direction perpendicular to the machine direction (MD) of the electrode sheet.

The fluid spraying device for drying electrode sheet further includes a cover at least partially receiving the plurality of flow paths, wherein the cover includes first and second slots, and the first and second side nozzles may pass through the first slot, and the center nozzle may pass through the second slot.

Each of the first and second slots may extend in the first direction.

A dimension in the first direction of the first slot may be equal to or greater than a dimension in the first direction of the second slot.

The center nozzle may be positioned between the first and second side nozzles in the first direction.

The number of the center nozzles may be at least two.

Each of the plurality of flow paths may include silicone or rubber.

The fluid spraying device for drying electrode sheet may further include a control device configured to selectively supply fluid to the plurality of flow paths.

In the on state, the control device allows the supply of fluid to a flow path coupled to the first side nozzle and a flow path coupled to the second side nozzle, and may be configured to shut off the supply of fluid to nozzles coupled to the center nozzle.

In the off state, the control device may be configured to allow the supply of fluid to a flow path coupled to the first side nozzle, a flow path coupled to the second side nozzle, and a flow path coupled to the center nozzle.

The first direction may be a transverse direction (TD) of the electrode sheet.

According to exemplary embodiments of the present invention to address the above problems, an electrode sheet drying device is provided. The electrode sheet drying device includes: a transfer part transferring the electrode sheet; a drying part drying the electrode sheets transferred by the transfer part; and a fluid spraying device spraying fluid onto an electrode sheet transferred by the transfer part, wherein the fluid spraying device includes: a fluid storage tank; a plurality of flow paths in fluid communication with the fluid storage tank; a first side nozzle coupled to one of the plurality of flow paths; a second side nozzle coupled to one of the plurality of flow paths; at least one center nozzle coupled to one of the plurality of flow paths, wherein the first and second side nozzles and the center nozzle are configured to be movable in a first direction perpendicular to the machine direction (MD) of the electrode sheet.

The center nozzle may be positioned between the first and second side nozzles in the first direction.

The number of the center nozzles may be at least two.

Each of the first and second side nozzles and the center nozzle may be configured to spray a fluid onto the non-coated part of the electrode sheet.

### [Advantageous Effects]

The fluid spraying device for drying electrode sheets according to exemplary embodiments of the present invention can address stress concentration phenomena that appear on the non-coated part, thereby preventing the occurrence of wrinkles and cracks in the electrode sheets.

The fluid spraying device for drying electrode sheets according to exemplary embodiments of the present invention can be used for drying different electrode sheets with different patterns of non-coated parts.

The effects that may be obtained from the exemplary embodiments of the present invention are not limited to those mentioned above, and other effects not mentioned may be clearly derived and understood by one of ordinary skill in the art to which the exemplary embodiments of the present invention belong from the following description. That is, unintended effects of practicing the exemplary embodiments of the present invention may also be derived from the exemplary embodiments of the present disclosure by one of ordinary skill in the art.

### [Brief Description of the Drawings]

FIG. 1 is a perspective view to illustrate a fluid spraying device for drying electrode sheets according to exemplary embodiments of the present invention.
FIGS. 2 through 4 are conceptual diagrams schematically illustrating a fluid spraying device for drying electrode sheets according to exemplary embodiments of the present invention, respectively.
FIG. 5 is a conceptual diagram schematically illustrating an electrode sheet drying device according to exemplary embodiments of the present invention.

### [Best Mode for Carrying Out the Invention]

Hereinafter, preferred embodiments of the present invention will be described in detail with reference to the accompanying drawings. Prior to this, it should be noted that the terms or words used in this specification and the claims are not to be construed in their ordinary or dictionary sense, but rather in a sense and concept consistent with the technical idea of the invention, based on the principle that the inventor may properly define the concept of a term to best describe his/her invention.

Accordingly, it is to be understood that the embodiments described herein and the configurations illustrated in the drawings are only the most preferred embodiments of the invention and are not intended to be exhaustive of the technical ideas of the invention, and that there may be various equivalents and modifications that may be substituted for them at the time of filing.

Furthermore, in describing the invention, specific descriptions of related known configurations or features are omitted where it is determined that such detailed descriptions would obscure the essence of the invention.

Because the embodiments of the present invention are provided to more fully explain the invention to those of ordinary skill in the art, the shapes and sizes of components in the drawings may be exaggerated, omitted, or shown schematically for clarity. Accordingly, the size or proportion of each component is not necessarily indicative of its actual size or proportion.

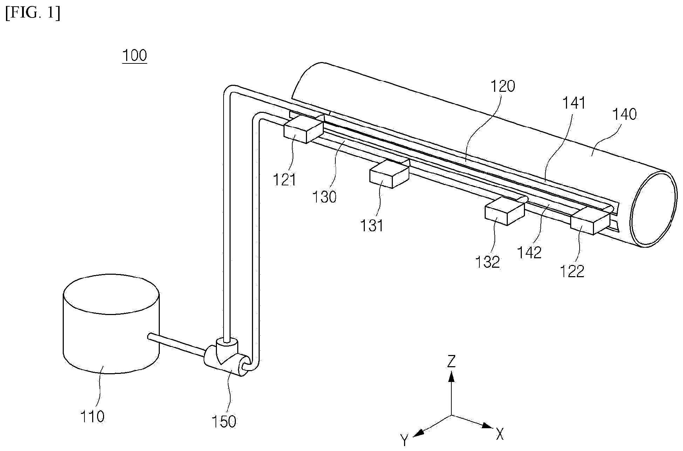

FIG. 1 is a perspective view to illustrate a fluid spraying device for drying electrode sheet 100 according to exemplary embodiments of the present invention.

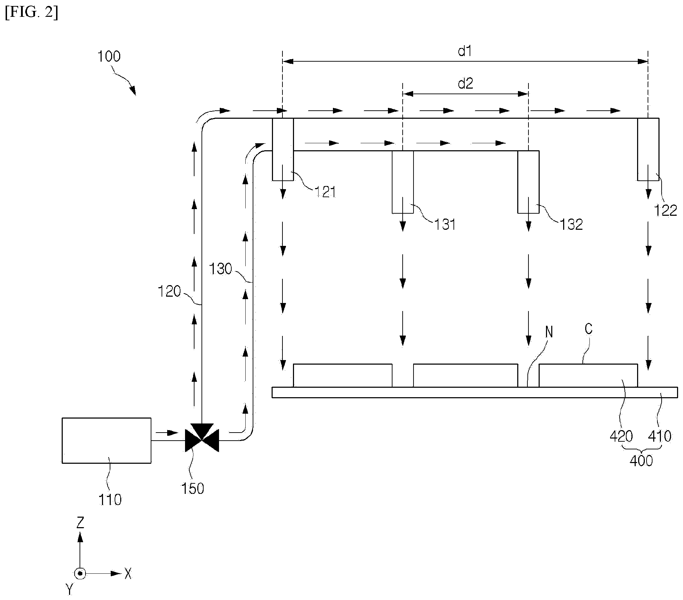

FIG. 2 is a conceptual diagram schematically illustrating a fluid spraying device for drying electrode sheet 100 according to exemplary embodiments of the present invention.

Referring to FIG. 2, the electrode sheet 400 may include a current collector 410 and an electrode slurry 420. In some embodiments, the electrode slurry 420 may be applied to one surface of the current collector 410. In some embodiments, the electrode slurry 420 may be applied to both sides of the current collector 410. The portion of the electrode slurry 420 applied to the current collector 410 of the electrode sheet 400 may be referred to as the coated part C. The portion of the electrode sheet 400 where the electrode slurry 420 is not applied to the current collector 410 of the electrode sheet 400 may be referred to as the non-coated part N. In some embodiments, the electrode sheet 400 may be a positive electrode sheet or a negative electrode sheet.

Referring to FIGS. 1 and 2, the fluid spraying device 100 for drying electrode sheets may include a fluid storage tank 110, a first flow path 120, a second flow path 130, a first side nozzle 121, a second side nozzle 122, a first center nozzle 131, a second center nozzle 132, a cover 140, a first slot 141, a second slot 142, and a control device 150. Referring to Figure 2, the fluid spraying device 100 for drying electrode sheets may spray fluid onto electrode sheets 400 being transported in the machine direction (MD).

Hereinafter, a transverse direction (TD) of the electrode sheet 400 is defined as the X direction, a machine direction (MD) of the electrode sheet 400 is defined as the Y direction, and a direction substantially perpendicular to the electrode sheet 400 is defined as the Z direction. The X direction, Y direction, and Z direction may be substantially perpendicular to each other.

The fluid storage tank 110 may provide space for storing a fluid inside. In some embodiments, the shape of the fluid storage tank 110 may be a cylindrical column or a square column. The fluid storage tank 110 may include a pump (not shown) that supplies fluid from the interior of the fluid storage tank 110 to the exterior. The fluid storage tank 110 may include a pump control unit (not shown) that controls the operation of the pump (not shown). As the pump control unit (not shown) controls the pump (not shown), it may control a flow rate of fluid supplied from inside the fluid storage tank 110 to the outside.

In some embodiments, the fluid may be water. In some embodiments, the fluid may be the same substance as the solvent in the electrode slurry. In some embodiments, the fluid may include an organic solvent, such as N-methyl-2-pyrrolidone, dimethylformamide, acetone, dimethylacetamide, and mixtures thereof.

Each of the first flow path 120 and the second flow path 130 may be in fluid communication with the fluid storage tank 110. In some embodiments, each of the first flow path 120 and the second flow path 130 may be in direct communication with the fluid storage tank 110 and may receive fluid from the fluid storage tank 110. In some embodiments, each of the first flow path 120 and the second flow path 130 may be branched from a separate flow path that is directly connected to the fluid storage tank 110 and may receive fluid from the fluid storage tank 110.

Each of the first flow path 120 and the second flow path 130 may include silicone or rubber. Each of the first flow path 120 and the second flow path 130 may be a silicone pipe, a silicone tube, a rubber pipe, or a rubber tube. In some embodiments, at least a portion of the first flow path 120 is movable in the X direction. In some embodiments, at least a portion of the second flow path 130 is movable in the X direction. In some embodiments, the portion of the first flow path 120 received by the cover 140 is at least partially movable in the X direction. In some embodiments, the portion of the second flow path 130 received by the cover 140 is at least partially movable in the X direction. The first flow path 120 may be moved in the X direction as needed. The second flow path 130 may be moved in the X direction as needed.

Each of the first side nozzle 121 and the second side nozzle 122 may be coupled to the first flow path 120. In some embodiments, each of the first side nozzle 121 and the second side nozzle 122 may be inserted and coupled to a respective protruding part (not shown) located on a side of the first flow path 120 and protruding from the side of the first flow path 120. In some embodiments, the protruding part (not shown) may protrude from the sides of the first flow path 120 in a Y direction.

Each of the first side nozzle 121 and the second side nozzle 122 may include silicone or rubber.

Each of the first side nozzle 121 and the second side nozzle 122 may receive fluid from the first flow path 120. Each of the first side nozzle 121 and the second side nozzle 122 can spray fluid in the Z direction to the non-coated part N of the electrode sheet 400 corresponding to each of the first side nozzle 121 and the second side nozzle 122. Each of the first side nozzle 121 and the second side nozzle 122 may overlap in the Z-direction with the non-coated part N of the electrode sheet 400 corresponding to each of the first side nozzle 121 and the second side nozzle 122.

The center nozzle is described below, but for ease of explanation, the number of center nozzles is assumed to be two. In some embodiments, the number of center nozzles may be one or more. In some embodiments, the number of center nozzles can be more than two. In some embodiments, the number of center nozzles may be three or more. In some embodiments, the number of center nozzles may be 10 or fewer. In some embodiments, the number of center nozzles may be 9 or fewer. In some embodiments, the number of center nozzles may be eight or fewer.

Each of the first center nozzle 131 and the second center nozzle 132 may be coupled to the second flow path 130. In some embodiments, each of the first center nozzle 131 and the second center nozzle 132 may be inserted and coupled to a respective protruding part (not shown) located on a side of the second flow path 130 and protruding from the side of the second flow path 130. In some embodiments, the protruding part (not shown) may protrude from the sides of the second flow path 130 in a Y direction.

Each of the first center nozzle 131 and the second center nozzle 132 may include silicone or rubber.

Each of the first center nozzle 131 and the second center nozzle 132 may receive fluid from the second flow path 130. Each of the first center nozzle 131 and the second center nozzle 132 may spray fluid in the Z direction into the non-coated part N of the electrode sheet 400 corresponding to each of the first center nozzle 131 and the second center nozzle 132. Each of the first center nozzle 131 and the second center nozzle 132 may overlap in the Z direction with the non-coated part N of the electrode sheet 400 corresponding to each of the first center nozzle 131 and the second center nozzle 132.

Each of the first side nozzle 121 and the second side nozzle 122 is movable in the X direction. In some embodiments, each of the first side nozzle 121 and the second side nozzle 122 can be moved in the X direction by moving the first flow path 120 in the X direction. In some embodiments, each of the first side nozzle 121 and the second side nozzle 122 can be moved to overlap in the Z direction with the non-coated part N of the electrode sheet 400 corresponding to each of the first side nozzle 121 and the second side nozzle 122. Accordingly, each of the first side nozzle 121 and the second side nozzle 122 can spray fluid onto the non-coated part N of the electrode sheet 400. When each of the first side nozzle 121 and the second side nozzle 122 is moved in the X direction, the distance d1 in the X direction between the first side nozzle 121 and the second side nozzle 122 may be substantially constant.

Each of the first center nozzle 131 and the second center nozzle 132 is movable in the X direction. In some embodiments, by moving the second flow path 130 in the X direction, each of the first center nozzle 131 and the second center nozzle 132 can be moved in the X direction. In some embodiments, each of the first center nozzle 131 and the second center nozzle 132 may be moved to overlap in the Z direction with the nom-coated part N of the electrode sheet 400 corresponding to each of the first center nozzle 131 and the second center nozzle 132. Accordingly, each of the first center nozzle 131 and the second center nozzle 132 may spray fluid onto the non-coated part N of the electrode sheet 400 corresponding to each of the first center nozzle 131 and the second center nozzle 132. When each of the first center nozzle 131 and the second center nozzle 132 is moved in the X direction, the distance d2 in the X direction between the first center nozzle 131 and the second center nozzle 132 may be substantially constant.

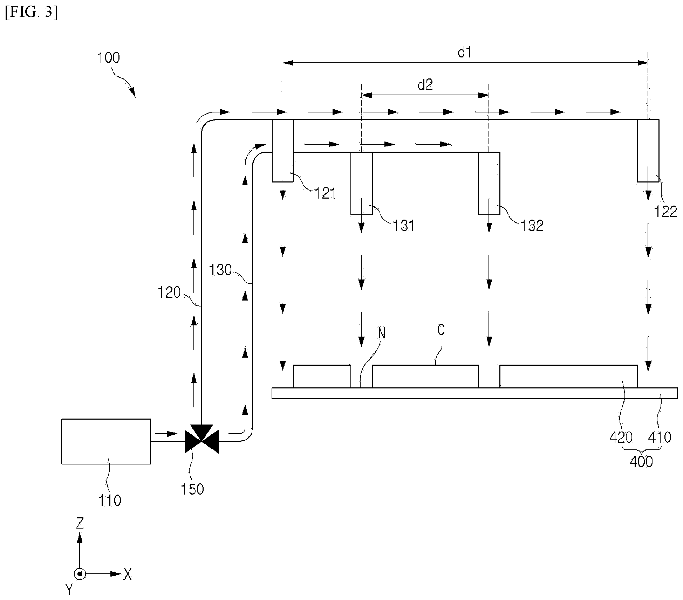

FIG. 3 is a conceptual diagram schematically illustrating a fluid spraying device for drying electrode sheet 100 according to exemplary embodiments of the present invention. FIG. 3 differs from FIG. 2 in the position of each of the first center nozzle 131 and the second center nozzle 132 in the X direction. This is because the positions of the non-coated parts N of the electrode sheet 400 in FIG. 3 are different from the positions of the non-coated parts N of the electrode sheet 400 in FIG. 2. As described above, when the positions of the non-coated parts N of the electrode sheet 400 are different, each of the first side nozzle 121, the second side nozzle 122, the first center nozzle 131, and the second center nozzle 132 may be moved in the X direction to correspond to the different positions of the non-coated parts N of the electrode sheet 400.

The distance d2 in the X direction from the first center nozzle 131 to the second center nozzle 132 may be smaller than the distance d1 in the X direction from the first side nozzle 121 to the second side nozzle 122. Each of the first center nozzle 131 and the second center nozzle 132 may be located between the first side nozzle 121 and the second side nozzle 122.

Referring again to FIG. 1, the cover 140 may at least partially receive each of the first flow path 120 and the second flow path 130. The cover 140 may protect and support each of the first flow path 120 and the second flow path 130. In some embodiments, the shape of the cover 140 may be a hollow cylindrical column or a hollow square column. The cover 140 may provide a path for each of the first side nozzle 121 and the second side nozzle 122 to move in the X direction while remaining fixed in the Y and Z directions. The cover 140 may provide a path for each of the first center nozzle 131 and the second center nozzle 132 to move in the X direction while remaining fixed in the Y and Z directions, respectively.

The cover 140 may include a first slot 141 and a second slot 142. In some embodiments, the planar shape of each of the first slot 141 and the second slot 142 may be a rectangle or a rounded corner rectangle having a long length and a narrow width.

Each of the first side nozzle 121 and the second side nozzle 122 can pass through the first slot 141. In some embodiments, the dimensions in the narrow direction of the first slot 141 may be substantially the same as the dimensions in the long direction of each of the protruding parts (not shown) located on the sides of the first flow path 120 and protruding from the sides of the first flow path 120 in a direction substantially perpendicular to the narrow direction and the long direction. Accordingly, the first slot 141 can fix each of the first side nozzle 121 and second side nozzle 122 insert-coupled to the protruding parts (not shown) of the first flow path 120 in the Z direction. In some embodiments, the dimensions in the narrow direction of the first slot 141 may be smaller than the dimensions in the narrow direction of each of the first side nozzle 121 and the second side nozzle 122. Accordingly, the first slot 141 may fix each of the first side nozzle 121 and the second side nozzle 122 in the Y direction. The first slot 141 may be a path for each of the first side nozzle 121 and the second side nozzle 122 to move in the X direction.

Each of the first center nozzle 131 and the second center nozzle 132 can pass through the second slot 142. In some embodiments, the dimensions in the narrow direction of the second slot 142 may be substantially the same as the dimensions in the narrow direction of each of the protruding part (not shown) located on the sides of the second flow path 130 and protruding from the sides of the second flow path 130 in a direction substantially perpendicular to the narrow direction and the long direction. Accordingly, the second slot 142 can fix each of the first side nozzle 121 and second side nozzle 122 insert-coupled to the protruding parts (not shown) of the second flow path 130 in the Z direction. In some embodiments, the dimensions in the narrow direction of the second slot 142 may be smaller than the dimensions in the narrow direction of each of the first center nozzle 131 and the second center nozzle 132. Accordingly, the second slot 142 may fix each of the first center nozzle 131 and the second center nozzle 132 in the Y direction. The second slot 142 may be a path for each of the first center nozzle 131 and the second center nozzle 132 to move in the X direction.

In some embodiments, a dimension in the X direction of the first slot 141 may be substantially the same as a dimension in the X direction of the second slot 142. In some embodiments, the dimension in the X direction of the first slot 141 may be larger than the dimension in the X direction of the second slot 142.

In some embodiments, the first slot 141 may be positioned above the second slot 142 in the Z direction. In this case, each of the first side nozzle 121 and the second side nozzle 122 may be positioned higher than each of the first center nozzle 131 and the second center nozzle 132 in the Z direction. In this case, each of the first side nozzle 121 and the second side nozzle 122 may be located further away from the electrode sheet 400 than each of the first center nozzle 131 and the second center nozzle 132.

In some embodiments, the first slot 141 may be located lower than the second slot 142 in the Z direction. In this case, each of the first side nozzle 121 and the second side nozzle 122 may be located lower than each of the first center nozzle 131 and the second center nozzle 132 in the Z direction. In this case, each of the first side nozzle 121 and the second side nozzle 122 may be located closer to the electrode sheet 400 than each of the first center nozzle 131 and the second center nozzle 132.

The control device 150 may be configured to selectively supply fluid to each of the first flow path 120 and the second flow path 130. A user may control the control device 150 in response to a pattern of the non-coated part N of the electrode sheet 400.

The control device 150 may be configured to allow the supply of fluid to the first flow path 120 and block the supply of fluid to the second flow path 130 in an on state. When the control 150 is in the on state, the supply of fluid to the first flow path 120 is permitted, and thus the supply of fluid to each of the first side nozzle 121 and the second side nozzle 122 is permitted. Accordingly, each of the first side nozzle 121 and the second side nozzle 122 can spray fluid onto the non-coated part N of the electrode sheet 400 corresponding to each of the first side nozzle 121 and the second side nozzle 122. When the control device 150 is in the on state, the supply of fluid to the second flow path 130 is blocked, and thus the supply of fluid to each of the first center nozzle 131 and the second center nozzle 132 is blocked.

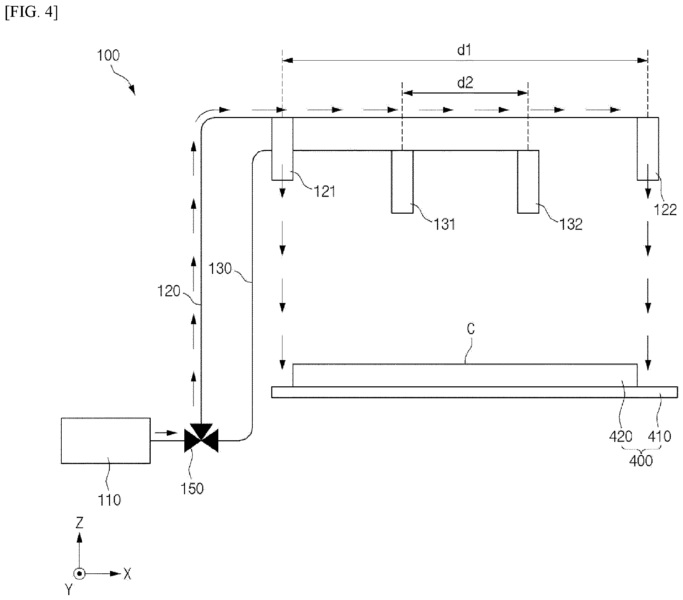

FIG. 4 is a conceptual diagram schematically illustrating a fluid spraying device for drying electrode sheet according to exemplary embodiments of the present invention. FIG. 4 differs from FIG. 2 in the non-coated part N pattern of the electrode sheet 400. FIG. 4 is illustrated when the control device 150 is in the on state, while FIG. 2 is illustrated when the control device 150 is in the off state.

Referring to FIG. 4, each of the first side nozzle 121 and the second side nozzle 122 can overlap in the Z directions with the non-coated part N of the electrode sheet 400 corresponding to each of the first side nozzle 121 and the second side nozzle 122. Referring to the arrows in FIG. 4, each of the first side nozzle 121 and the second side nozzle 122 can spray fluid onto the non-coated part N of the electrode sheet 400 corresponding to each of the first side nozzle 121 and the second side nozzle 122. Each of the first center nozzle 131 and the second center nozzle 132 can overlap in the Z direction with the coated part C of the electrode sheet 400. Referring to the arrows in FIG. 4, the supply of fluid to each of the first center nozzle 131 and the second center nozzle 132 is blocked, so that each of the first center nozzle 131 and the second center nozzle 132 may not spray fluid.

The control device 150 may be configured to allow the supply of fluid to each of the first flow path 120 and the second flow path 130 in an off state. When the control device 150 is in the off state, the supply of fluid to each of the first flow path 120 and the second flow path 130 is permitted so that the supply of fluid to each of the first side nozzle 121, the second side nozzle 122, the first center nozzle 131, and the second center nozzle 132 is permitted. Accordingly, each of the first side nozzle 121, the second side nozzle 122, the first center nozzle 131, and the second center nozzle 132 can spray fluid onto the non-coated part N of the electrode sheet 400 corresponding to each of the first side nozzle 121, the second side nozzle 122, the first center nozzle 131, and the second center nozzle 132.

Referring to FIG. 2, each of the first side nozzle 121, the second side nozzle 122, the first center nozzle 131, and the second center nozzle 132 can overlap in the Z directions with the non-coated part N of the electrode sheet 400 corresponding to the first side nozzle 121, the second side nozzle 122, the first center nozzle 131, and the second center nozzle 132, respectively. Referring to the arrows in FIG. 2, each of the first side nozzle 121, the second side nozzle 122, the first center nozzle 131, and the second center nozzle 132 can spray fluid onto the non-coated part N of the electrode sheet 400 corresponding to each of the first side nozzle 121, the second side nozzle 122, the first center nozzle 131, and the second center nozzle 132.

In some embodiments, the control device 150 may be located at a point where the first flow path 120 and the second flow path 130 each branch off from a separate flow path that is directly connected to the fluid storage tank 110. In some embodiments, the control device 150 may be an AC solenoid valve, a DC solenoid valve, a ball valve, a butterfly valve, a globe valve, a cate valve, a diaphragm valve, or a three-way valve.

In some embodiments, the number of control device 150 may be two or more, in which case a first control device may be located in the first flow path 120 and a second control device may be located in the second flow path 130. When the number of control device 150 is more than two, each control device can block the supply of fluid to the flow path corresponding to the respective control device when in the on state and allow the supply of fluid to the flow path corresponding to the respective control device when in the off state.

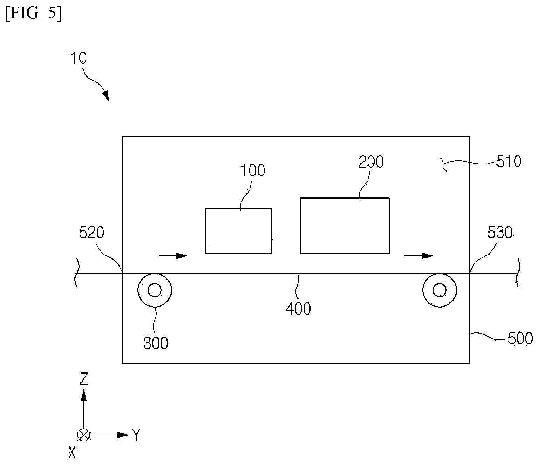

FIG. 5 is a conceptual diagram schematically illustrating an electrode sheet drying device 10 according to exemplary embodiments of the present invention.

Referring to FIG. 5, the electrode sheet drying device 10 may include a fluid spraying device for drying electrode sheet 100, a drying part 200, a transfer part 300, and a housing 500, and electrode sheets 400 may be transferred into the electrode sheet drying device 10.

The housing 500 may protect and support the fluid spraying device for drying the electrode sheet 100, the drying part 200, and the transfer part 300. The housing 500 may provide an interior space 510 for drying the electrode sheets 400. Heat used to dry the electrode sheets 400 may be circulated in the interior space 510 of the housing 500. The housing 500 may include an exhaust hole (not shown) configured to allow heat used in the drying of the electrode sheet 400 to be discharged to the outside.

On one side of the housing 500, an inlet 520 may be located where the electrode sheets 400 are entered. On the other side of the housing 500, there may be an outlet 530 through which the electrode sheets 400 are discharged. The inlet 520 and outlet 530 may be located opposite each other in the Y direction.

The fluid spraying device for drying the electrode sheet 100 is the same as described above, and therefore redundant description thereof will be omitted.

The drying part 200 may provide thermal energy to the electrode sheet 400 to remove solvents or moisture from the electrode slurry 420. In some embodiments, the drying part 200 may be a hot air supply heater.

The transfer part 300 can transfer the electrode sheet 400 in the Y direction. In some embodiments, the transfer part 300 may include a plurality of rollers that rotate under power from a motor (not shown). The electrode sheet 400 may be transferred in the Y direction by the rotation of the plurality of rollers.

The arrangement and number of each of the fluid spraying device for drying electrode sheet 100 and the drying part 200 shown in FIG. 5 are non-limiting examples. In some embodiments, the fluid spraying device for drying electrode sheet 100 may be disposed inside the drying part 200. In some embodiments, the number of each of the fluid spraying device for drying electrode sheet 100 and the drying part 200 may be two or more. In some embodiments, each of the fluid spraying device for drying electrode sheet 100 and the drying part 200 may be disposed on a lower part of the electrode sheet 400, as opposed to as shown in FIG. 5.

The present invention has been described in more detail above with reference to the drawings and embodiments. However, it is to be understood that the configurations shown in the drawings or embodiments described herein are only one embodiment of the invention and do not represent all of the technical ideas of the present invention, and that there may be various equivalents and modifications that may replace them at the time of filing the present disclosure.

### [Reference numerals]

10: ELECTRODE SHEET DRYING DEVICE
100: FLUID SPRAYING DEVICE FOR DRYING ELECTRODE SHEET
110: FLUID STORAGE TANK
120: FIRST FLOW PATH
121, 122: SIDE NOZZLE
130: SECOND FLOW PATH
131, 132: CENTER NOZZLE
140: COVER
141, 142: SLOT
150: CONTROL DEVICE
200: DRYING PART
300: TRANSFER PART
400: ELECTRODE SHEET
410: CURRENT COLLECTOR
420: ELECTRODE SLURRY
500: HOUSING
510: INTERIOR SPACE
520: INLET
530: OUTLET
C: COATED PART
N: NON-COATED PART

## Claims

1. A fluid spraying device for drying electrode sheet comprising:
a fluid storage tank;
a plurality of flow paths in fluid communication with the fluid storage tank;
a first side nozzle coupled to one of the plurality of flow paths;
a second side nozzle coupled to one of the plurality of flow paths;
at least one center nozzle coupled to one of the plurality of flow paths, wherein
the first and second side nozzles and the center nozzle are configured to be movable in a first direction perpendicular to the machine direction of the electrode sheet.

2. The fluid spraying device for drying electrode sheet of claim 1, further comprising:
a cover at least partially receiving the plurality of flow paths, wherein
the cover includes first and second slots,
the first and second side nozzles pass through the first slot, and
the center nozzle passes through the second slot.

3. The fluid spraying device for drying electrode sheet of claim 2, wherein
each of the first and second slots extends in the first direction.

4. The fluid spraying device for drying electrode sheet of claim 3, wherein
a dimension in the first direction of the first slot is equal to or greater than a dimension in the first direction of the second slot.

5. The fluid spraying device for drying electrode sheet of claim 3, wherein
the center nozzle is positioned between the first and second side nozzles in the first direction.

6. The fluid spraying device for drying electrode sheet of claim 1, wherein
the number of the center nozzles is at least two.

7. The fluid spraying device for drying electrode sheet of claim 1, wherein
each of the plurality of flow paths comprises silicone or rubber.

8. The fluid spraying device for drying electrode sheet of claim 1, further comprising:
a control device configured to selectively supply fluid to the plurality of flow paths.

9. The fluid spraying device for drying electrode sheet of claim 8, wherein
in the on state, the control device
allows the supply of fluid to a flow path coupled to the first side nozzle and a flow path coupled to the second side nozzle, and
is configured to shut off the supply of fluid to a flow path coupled to the center nozzle.

10. The fluid spraying device for drying electrode sheet of claim 8, wherein
in the off state, the control device
is configured to allow the supply of fluid to a flow path coupled to the first side nozzle, a flow path coupled to the second side nozzle, and a flow path coupled to the center nozzle.

11. The fluid spraying device for drying electrode sheet of claim 1, wherein
the first direction is a transverse direction of the electrode sheet.

12. An electrode sheet drying device comprising:
a transfer part transferring the electrode sheet;
a drying part drying the electrode sheets transferred by the transfer part; and
a fluid spraying device spraying fluid onto an electrode sheet transferred by the transfer part, wherein
the fluid spraying device comprises:
a fluid storage tank;
a plurality of flow paths in fluid communication with the fluid storage tank;
a first side nozzle coupled to one of the plurality of flow paths;
a second side nozzle coupled to one of the plurality of flow paths;
at least one center nozzle coupled to one of the plurality of flow paths, wherein
the first and second side nozzles and the center nozzle are configured to be movable in a first direction perpendicular to the machine direction (MD) of the electrode sheet.

13. The electrode sheet drying device of claim 12, wherein
the center nozzle is positioned between the first and second side nozzles in the first direction.

14. The electrode sheet drying device of claim 12, wherein
the number of the center nozzles is at least two.

15. The electrode sheet drying device of claim 12, wherein
each of the first and second side nozzles and the center nozzle is configured to spray a fluid onto the non-coated part of the electrode sheet.
